# EUROPEAN PATENT SPECIFICATION

(11) **EP 3 077 583 B1**
(45) Date of publication and mention of the grant of the patent: **08.08.2018**
(21) Application number: 14790059.1
(22) Date of filing: 24.10.2014
(51) Int. Cl.: F25D 29/00, D06F 39/00, A47L 15/42, G02B 6/00, D06F 58/20, D06F 25/00, F24C 7/08

(54) **A HOUSEHOLD APPLIANCE COMPRISING A LIGHT GUIDE**
HAUSHALTSGERÄT MIT EINEM LICHTLEITER
APPAREIL MÉNAGER COMPRENANT UN GUIDE DE LUMIÈRE

(30) Priority: 04.12.2013 TR 201314200
(43) Date of publication of application: 12.10.2016
(73) Proprietor: Arçelik Anonim Sirketi, 34950 Istanbul (TR)
(72) Inventor: CETINKAYA, Bugra, 34950 Istanbul (TR); METIN, Ergin, 34950 Istanbul (TR); SEKER, Zeki, 34950 Istanbul (TR)
(86) International application number: PCT/EP2014/072894
(87) International publication number: WO 2015/082127

(56) References cited:
- EP-A2- 1 176 619
- US-A1- 2006 152 481
- US-A1- 2007 013 787
- US-A1- 2013 175 149

## Description

The present invention relates to a household appliance comprising a light guide situated behind the panel.

The users can select the program/function desired to be used with the keys located on the control panel of household appliances. In the state of the art, the light guides disposed behind the panel comprise housings wherein the keys are seated and the protrusions arranged at the rear side of the keys contact the switch located on the printed circuit board. Particularly in the convex panels, the distance of the keys to the switch can change, so keys with protrusions of different lengths are used. When the keys are arranged erroneously, the protrusion does not contact the switch and the related function cannot be performed. Furthermore, manufacturing keys having protrusions of different lengths for different areas on the panel increases costs and the operator doing the assembly loses time.

In the Korean Patent Application No. KR20080094505, a washing machine is disclosed that comprises guide members which guide movements of the buttons.

European Patent Application EP 1 176619 A2 discloses a household appliance comprising a printed circuit board with switches and light sources. The board is disposed behind a holder with U-shaped movable cutouts that can be pressed towards the switches by keys arranged in a panel in front of the holder.

The aim of the present invention is the realization of a household appliance wherein the production and assembly costs are decreased by using a single type of key.

The household appliance realized in order to attain the aim of the present invention, explicated in the first claim and the respective claims thereof, comprises at least one key, a light guide and a biasing member that is disposed on the light guide and that exerts force on the key. In the household appliance of the present invention, the keys are seated on the light guide and when the user presses on the key, the biasing member actuated by the protrusion stretches and contacts the switch. Since the biasing member stretches, it is not necessary to use a component on the key that provides stretching and to use keys with protrusions of different lengths. The biasing member furthermore enables the key to stay taut by exerting force against the key towards the outside of the panel.

In an embodiment of the present invention, the biasing member is produced by cutting out the sides and the center thereof and comprises two legs that provide its physical connection to the light guide. The parts produced from hard materials are formed as leaf springs, thus gaining stretching properties.

According to the present invention, the biasing member comprises a housing wherein the protrusion is seated and an extension that is disposed behind the housing, that is operationally connected to the protrusion and that contacts the switch. The extension moves as operationally connected to the protrusion. The protrusion is used for centering the key to the housing and for actuating the extension.

In an embodiment of the present invention, the biasing element is produced together with the light guide in the same mould. Using a single mould in production enables production costs to decrease and also ease in assembly.

In an embodiment of the present invention, the protrusion is shaped as a plus sign (+) and the housing is in matching plus (+) form. When the protrusion is seated in the housing, the key is enabled to only move in the pressing direction in a single dimension.

In an embodiment of the present invention, the protrusion is seated snap-fittingly in the housing in the vertical direction. Thus, the horizontal movements of the key can be transmitted to the switch better, for example when the user presses on the side of the key, the protrusion transmits the movement to the switch since the protrusion is firmly seated in the housing.

In an embodiment of the present invention, the protrusion is loosely seated in the housing in the horizontal direction. In this embodiment, the key is enabled to push the housing indirectly and hence the displacement in a direction perpendicular to the panel is increased which is provided by the stretching movement done by the leg.

The household appliance of the present invention can be a washing machine, a laundry washing and drying machine, a drying machine, a dishwasher, a cooking device or a refrigerator in different embodiments of the present invention.

By means of the flexible biasing member having the extension and used in the household appliance of the present invention, the keys used on the panel are enabled to be a single type, thereby decreasing production and assembly costs. Furthermore, by means of the protrusion that is loosely seated in the horizontal direction, the displacement in a direction perpendicular to the panel is increased and the leg is prevented from breaking due to stretching. As the protrusion is seated snap-fittingly in the vertical direction, the movement is transmitted to the switch even if the user presses the key from the side.

The household appliance realized in order to attain the aim of the present invention is illustrated in the attached figures, where:

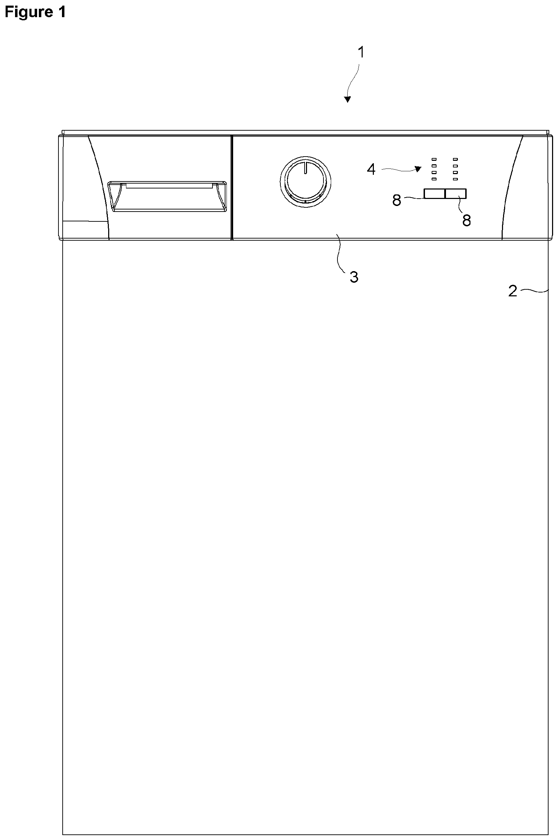

Figure 1 - is the front schematic view of a household appliance.

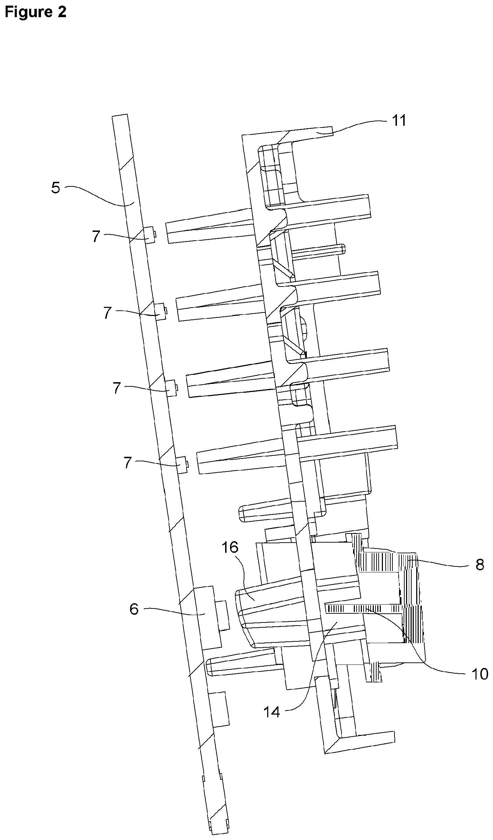

Figure 2 - is the sideways schematic view of a printed circuit board, components disposed thereon and a light guide in an embodiment of the present invention.

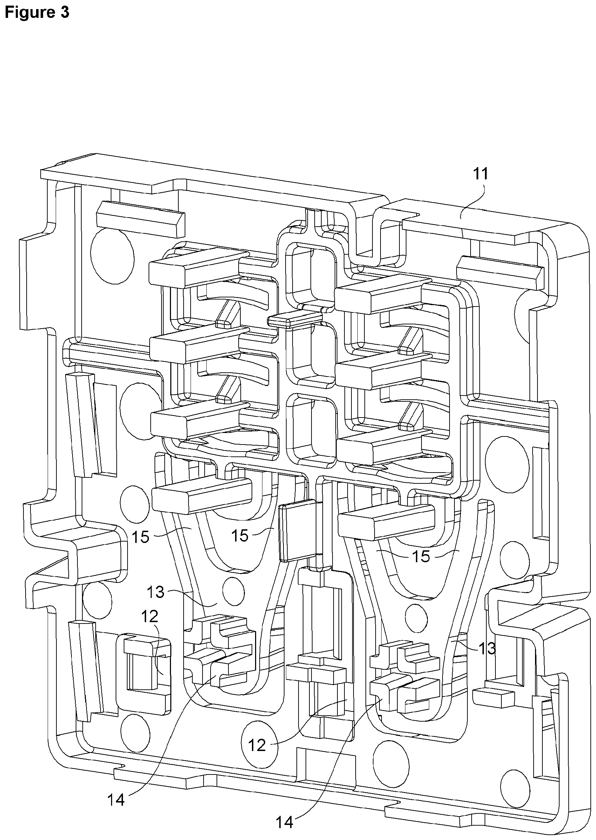

Figure 3 - is the perspective view of a light guide in another embodiment of the present invention.

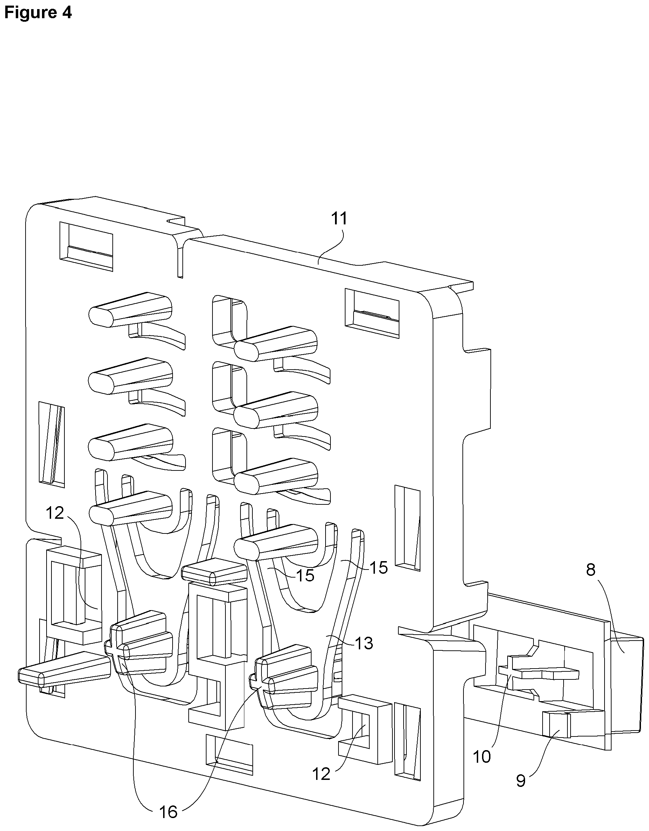

Figure 4 - is another perspective view of a light guide in yet another embodiment of the present invention.

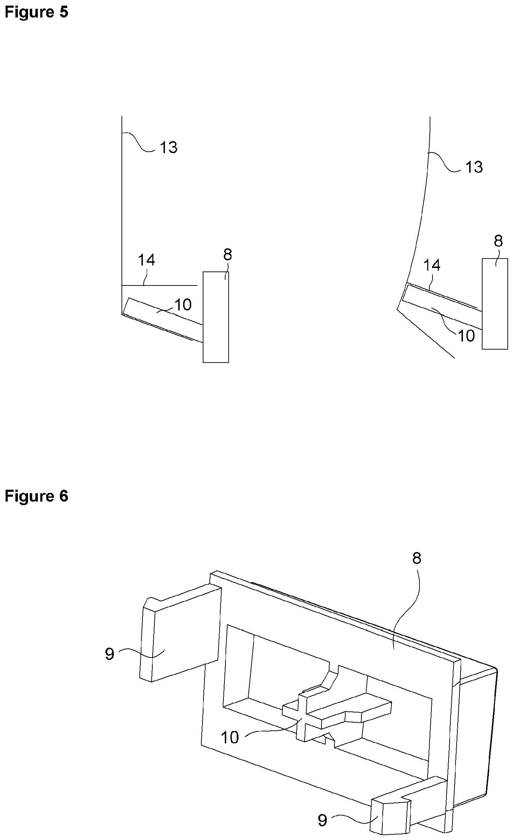

Figure 5 - is the sideways schematic view of a biasing member and a key in an embodiment of the present invention.
Figure 6 - is the perspective view of a key in an embodiment of the present invention.

The elements illustrated in the figures are numbered as follows:
1 - Household appliance
2 - Body
3 - Panel
4 - Window
5 - Printed circuit board
6 - Switch
7 - Light source
8 - Key
9 - Foot
10 - Protrusion
11 - Light guide
12 - Hole
13 - Biasing member
14 - Housing
15 - Leg
16 - Extension

The household appliance (1) comprises a body (2); a panel (3) disposed on the body (2) and having at least one transparent window (4); a printed circuit board (5) disposed behind the panel (3) and comprising at least one switch (6) and at least one light source (7) actuated by the switch (6); at least one key (8) having at least one foot (9) providing fastening and at least one protrusion (10) enabling the movement to be transmitted to the switch (6); a light guide (11) that transmits the light of the light source (7) to the window (4), whereon the keys (8) are placed and that has at least one hole (12) wherein the foot (9) is seated.

In the household appliance (1), when the user touches/presses the related key (8) for selecting the desired function, the protrusion (10) opens/closes the switch (6). The key (8) is fixed to the light guide (11) as the foot (9) is seated in the hole (12).

The household appliance of the present invention comprises a biasing member (13) that is disposed on the light guide (11) and that exerts force on the switch (6). When the user presses on the key (8), the key (8) exerts pressure on the biasing member (13), the biasing member (13) stretches and the biasing member (13) moved by the protrusion (10) contacts the switch (6). As the biasing member (13) stretches, pressing feeling of the user is not lost and using keys (8) with different length of protrusion (10) is not necessary. Moreover, the biasing member (13) pushes the key (8) outwards, enabling it to remain firm.

In an embodiment of the present invention, the household appliance (1) comprises the biasing member (13) that is produced in the shape of a leaf spring by cutting out the center part and the sides thereof and that has two legs (15) providing the connection to the light guide (11). By means of the legs (15) used on the light guide (11) produced from hard plastic, a component that is not flexible gains flexibility.

According to the present invention, the biasing member (13) comprises a housing (14) wherein the protrusion (10) is seated and an extension (16) that is disposed behind the housing (14), that is operationally connected with the protrusion (10) and that touches the switch (6). Consequently, the protrusion (10) is not required to contact the switch (6) and the protrusion (10) is used only for centering and fastening purposes.

In an embodiment of the present invention, the household appliance (1) comprises the biasing member (13) that is produced as a single piece together with the light guide (11). The parts that provide the fixing of the keys (8) being manufactured together with the light guide (11) in one mould creates cost advantage.

In an embodiment of the present invention, the household appliance (1) comprises the protrusion (10), the end of which is plus (+) shaped and the housing (14) in plus (+) shape wherein the protrusion (10) can be seated. By means of these structures, the movement of the key (8) in a plane parallel to the panel (3) is limited and the key (8) is enabled to move only in a direction perpendicular to the panel (3).

In an embodiment of the present invention, the household appliance (1) comprises the protrusion (10) and the housing (14) that are connected vertically by snap-fitting. As the connection in the vertical direction is snap-fitting, the extension (16) can transmit the movement to the switch (6) even if the user presses on the side of the key (8).

In an embodiment of the present invention, the household appliance (1) comprises the protrusion (10) and the housing (14) that are loosely connected in the horizontal direction. As the connection in the horizontal direction is loose, when the user presses on the key (8), the protrusion (10) pushes the housing (14), thus enabling the biasing member (13) to stretch some more.

In an embodiment of the present invention, the household appliance (1) is a washing machine or a laundry washing and drying machine or a laundry drying machine. For example, the keys (8) are used in selecting the functions like prewashing or taking in additional water.

In an embodiment of the present invention, the household appliance (1) is a cooking device.

In an embodiment of the present invention, the household appliance (1) is a dishwasher.

In an embodiment of the present invention, the household appliance (1) is a refrigerator.

By means of the biasing member (13) of the present invention, a single type of key (8) is enabled to be used in household appliances (1) comprising the light guide (11). Using a single type of key (8) decreases production and assembly costs and when the user accidentally dismounts the keys (8); they can be easily mounted in place. By means of the biasing member (13), the pressing feeling of the user is not lost and it is not required to use a component on the key (8) that provides stretching. By the protrusion (10) being seated snap-fittingly in the vertical direction, the extension (16) is enabled to transmit the movement to the switch (6) whichever part of the key (8) is pressed on. By means of the loosely seated protrusion (10) in the horizontal direction, the key (8) is enabled to be displaced some more in the vertical direction towards the panel (3) apart from the flexing done by the leg (15).

## Claims

1. A household appliance (1) comprising
- a body (2);
- a control panel (3) disposed on the body (2) and having at least one transparent window (4);
- a printed circuit board (5) disposed behind the panel (3) and comprising at least one switch (6) and at least one light source (7) actuated by the switch (6);
- at least one key (8) having at least one foot (9) providing fastening and at least one protrusion (10) enabling a movement of the key to be transmitted to the switch (6), **characterized in that**,
- a light guide (11) transmits the light of the light source (7) to the window (4), said light guide (11) having the key (8) placed on it and having at least one hole (12) wherein the foot (9) is seated,
- a biasing member (13) is disposed on the light guide (11) and exerts force on the key (8) towards the outside of the panel,
wherein the biasing member (13) has a housing (14) wherein the protrusion (10) is seated and an extension (16) is disposed behind the housing (14), that is operationally connected with the protrusion (10) and that touches the switch (6).

2. A household appliance (1) as in Claim 1, **characterized in that** the biasing member (13) is produced in the shape of a leaf spring by cutting out the center part and the sides thereof and has two legs (15) providing the connection to the light guide (11).

3. A household appliance (1) as in any one of the above claims, **characterized in that** the biasing member (13) is produced together with the light guide (11) as a single piece.

4. A household appliance (1) as in any one of the above claims, **characterized in that**, the end of the protrusion (10) is plus-shaped and **in that** the housing (14) is shaped in a matching-plus-form, in which the protrusion (10) can be seated.

5. A household appliance (1) as in any one of the above claims, which is a washing machine.

6. A household appliance (1) as in any one of the Claims 1 to 4, which is a laundry washing and drying machine.

7. A household appliance (1) as in any one of the Claims 1 to 4, which is a laundry drying machine.

8. A household appliance (1) as in any one of the above Claims 1 to 4, which is a cooking device.

9. A household appliance (1) as in any one of the Claims 1 to 5, which is a dishwasher.

10. A household appliance (1) as in any one of the Claims 1 to 4, which is a refrigerator.

## Patentansprüche

1. Haushaltsgerät (1) umfassend
- einen Körper (2),
- ein Bedienfeld (3), das auf dem Körper (2) angeordnet ist und mindestens ein transparentes Fenster (4) aufweist;
- eine Leiterplatte (5), die hinter dem Bedienfeld (3) angeordnet ist und mindestens einen Schalter (6) und mindestens eine durch den Schalter (6) betätigte Lichtquelle (7) aufweist;
- mindestens einen Schlüssel (8) mit mindestens einem Fuß (9), der eine Befestigung und mindestens einen Vorsprung (10) bereitstellt, der eine Übertragung des Schlüssels auf den Schalter (6) ermöglicht, **dadurch gekennzeichnet, dass**
- ein Lichtleiter (11) das Licht der Lichtquelle (7) auf das Fenster (4) überträgt, wobei der Lichtleiter (11) den Schlüssel (8) trägt und mindestens ein Loch (12) aufweist, in dem sich der Fuß (9) befindet,
- ein Vorspannelement (13) an dem Lichtleiter (11) angeordnet ist und eine Kraft auf den Schlüssel (8) in Richtung der Außenseite des Paneels ausübt,
wobei das Vorspannelement (13) ein Gehäuse (14) aufweist, indem der Vorsprung (10) sich befindet und eine Verlängerung (16) hinter dem Gehäuse (14) angeordnet ist, die betriebsmäßig mit dem Vorsprung (10) verbunden ist und den Schalter (6) berührt.

2. Haushaltsgerät (1) nach Anspruch 1, **dadurch gekennzeichnet, dass** das Vorspannelement (13) in Form einer Blattfeder durch Ausschneiden des Mittelteils und der Seiten davon hergestellt ist und zwei Beine (15) aufweist, die für die Verbindung mit dem Lichtleiter (11) sorgt.

3. Haushaltsgerät (1) nach einem der vorangehenden Ansprüche, **dadurch gekennzeichnet, dass** das Vorspannelement (13) einstückig mit dem Lichtleiter (11) hergestellt ist.

4. Haushaltsgerät (1) nach einem der vorangehenden Ansprüche, **dadurch gekennzeichnet, dass** das Ende des Vorsprungs (10) Plus-förmig ist und dass das Gehäuse (14) in einer übereinstimmenden Plus-Form geformt ist, in dem der Vorsprung (10) sich befinden kann.

5. Haushaltsgerät (1) nach einem der vorangehenden Ansprüche, das eine Waschmaschine ist.

6. Haushaltsgerät (1) nach einem der Ansprüche 1 bis 4, das eine Wasch- und - Trocknermaschine ist.

7. Haushaltsgerät (1) nach einem der Ansprüche 1 bis 4, das eine Wäschetrockner ist.

8. Haushaltsgerät (1) nach einem der Ansprüche 1 bis 4, das eine Kochgerät ist.

9. Haushaltsgerät (1) nach einem der Ansprüche 1 bis 5, das eine Spülmaschine ist.

10. Haushaltsgerät (1) nach einem der Ansprüche 1 bis 4, das eine Kühlgerät ist.

## Revendications

1. Appareil ménager (1) comprenant
- un corps (2),
- un panneau de commande (3) disposé sur le corps (2) et ayant au moins une fenêtre transparente (4);
- une carte de circuit imprimé (5) disposée derrière le panneau (3) et comprenant au moins un commutateur (6) et au moins une source de lumière (7) actionnée par le commutateur (6);
- au moins une clé (8) ayant au moins un pied (9) assurant la fixation et au moins une saillie (10) permettant de transmettre un mouvement de la clé à le commutateur (6) **caractérisé en ce que**,
- un guide de lumière (11) transmet la lumière de la source de lumière (7) à la fenêtre (4), ledit guide de lumière (11) étant placé sur la clé (8) et comportant au moins un trou (12) dans lequel le pied (9) est assis,
- un élément de sollicitation (13) est disposé sur le guide de lumière (11) et exerce une force sur la clé (8) vers l'extérieur du panneau,
dans lequel l'élément de sollicitation (13) comporte un boîtier (14) dans lequel la saillie (10) est placée et une extension (16) est disposée derrière le boîtier (14), qui est connectée de manière opérationnelle à la saillie (10) et touche le commutateur (6).

2. Appareil ménager (1) selon la revendication 1, **caractérisé en ce que** l'élément de sollicitation (13) est réalisé sous la forme d'un ressort à lame en découpant la partie centrale et les côtés et comporte deux branches (15) assurant la connexion le guide de lumière (11).

3. Appareil ménager (1) selon l'une quelconque des revendications précédentes, **caractérisé en ce que** l'élément de sollicitation (13) est réalisé en une seule pièce avec le guide de lumière (11).

4. Appareil ménager (1) selon l'une quelconque des revendications précédentes, **caractérisé en ce que** l'extrémité de la saillie (10) est en forme de plus et **en ce que** le boîtier (14) a une forme en correspondance, dans lequel la saillie (10) peut être placée.

5. Appareil ménager (1) selon l'une quelconque des revendications précédentes, qui est une machine à laver.

6. Appareil ménager (1) selon l'une quelconque des revendications 1 à 4, qui est une machine à laver et à sécher le linge.

7. Appareil ménager (1) selon l'une quelconque des revendications 1 à 4, qui est une machine à sécher le linge.

8. Appareil ménager (1) selon l'une quelconque des revendications 1 à 4, qui est un dispositif de cuisson.

9. Appareil ménager (1) selon l'une quelconque des revendications 1 à 5, qui est un lave-vaisselle.

10. Appareil ménager (1) selon l'une quelconque des revendications 1 à 4, qui est un réfrigérateur.
